# EUROPEAN PATENT APPLICATION

(11) **EP 1 411 587 A1**
(43) Date of publication of application: **21.04.2004**
(21) Application number: 03021016.5
(22) Date of filing: 17.09.2003
(51) Int. Cl.: H01Q 1/24, H04B 7/08

(54) **Antenna structure for electronic device with wireless communication unit**

(30) Priority: 15.10.2002 JP 2002300910
(71) Applicant: Kabushiki Kaisha Toshiba, Tokyo (JP)
(72) Inventor: Masaki, Toshiyuki, Toshiba Corp., Minato-ku Tokyo 105-8001 (JP)
(74) Representative: Henkel, Feiler & Hänzel

(57) **Abstract**

An electronic device (1) is disclosed which has a diversity type of antenna unit constituted by three antennas (20-22) and comprises a dual-band wireless communication function. The antenna unit has two transmission-receiving antennas (20,21) adapted to each of different frequency bands, and one receive-dedicated antenna (22).

## Description

The present invention generally relates to electronic devices with a wireless communication function, and relates in particular to a diversity type of antenna technology.

Various kinds of electronic devices with a wireless communication function which are applied, for example, to a wireless LAN (Local Area Network) have recently been developed. More specifically, such electronic devices include portable information terminals (or PDAs), personal computers, or other digital devices.

In connection with such electronic devices, antennas in a so-called diversity antennas are drawing attention in an attempt to obtain space diversity effects and polarization diversity effects (e.g., refer to Jpn. Pat. Appln. KOKAI Publication No. 2000-114848). Further, an electronic device equipped with a plurality of antennas has been developed to comply with a wireless communication function in a different wireless communication method (e.g., refer to Jpn. Pat. Appln. KOKAI Publication No. 2002-73210).

Incidentally, for example, in the wireless LAN constructed on the basis of a standard created by the IEEE802.11 committee, dual-band electronic devices are requested which are applied to both a wireless communication function in a 5 GHz frequency band in accordance with standard 11a of the committee and a wireless communication function in a 2.4 GHz frequency band in accordance with standard 11b (or 11g) of the committee.

An antenna structure employing the diversity antennas in a receiving mode is usually applied to such dual-band electronic devices. This is an antenna structure with a total of four antennas, that is, two antennas including a transmission-receiving antenna adaptive to a frequency band of 5 GHz and a receiving antenna in the diversity structure, and two antennas adaptive to a frequency band of 2.4 GHz.

However, in small-sized electronic devices such as notebook-sized personal computers and portable information terminals, it is difficult to mount four antennas because of severe restrictions in mounting components.

In accordance with one embodiment of the present invention, there is provided an electronic device with a diversity type of antenna unit which has two transmission-receiving antennas respectively adaptive to different frequency bands, and one receive-dedicated antenna.

The electronic device comprises: two transmission-receiving antennas respectively adapted to different frequency bands; a receiving antenna for the frequency bands which forms two diversity antennas together with the transmission-receiving antennas; and a wireless communication unit connected to the transmission-receiving antennas and the receiving antenna, which performs wireless communication in each of the frequency bands.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing essential parts of an electronic device associated with a first embodiment of the present invention;
FIG. 2 is a block diagram associated with a second embodiment;
FIG. 3 is a block diagram associated with a third embodiment; and
FIG. 4 is a view showing an appearance of a personal computer as a specific example of the electronic device associated with the first embodiment.

Embodiments of the present invention will hereinafter be described with reference to the drawings.

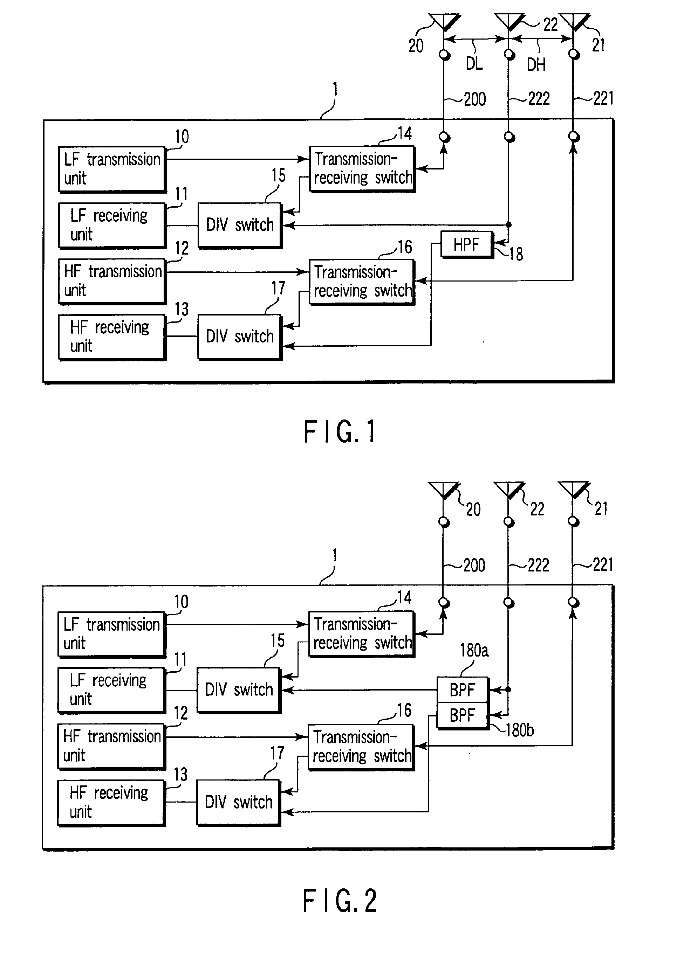

FIG. 1 is a block diagram showing essential parts of an electronic device with a diversity type of antenna unit associated with a first embodiment.

### (Configuration of the electronic device)

An electronic device 1 is, for example, a notebook type of personal computer or portable information terminal (or PDA), and has a built-in wireless communication unit which realizes a wireless communication function in a wireless LAN in two kinds of frequency bands.

Here, the two kinds of frequency bands mean specifications of the wireless LAN in a 5 GHz frequency band in accordance with, for example, standard IEEE802.11a (this may hereinafter be noted as HF), and the wireless LAN in a 2.4 GHz frequency band in accordance with, for example, standard IEEE802.11b which is on a relatively low frequency (this may hereinafter be noted as LF). It should be noted that the specifications of the LF wireless LAN may be based on standard IEEE802.11g, for example.

The wireless communication unit broadly has an RF (radio frequency) circuit in a 2.4 GHz band and an RF circuit in a 5 GHz band, and is structured on a wireless LAN circuit module substrate, for example. The RF circuit in a 2.4 GHz band includes an LF transmission unit 10 and an LF receiving unit 11. The RF circuit in a 5 GHz band includes an HF transmission unit 12 and an HF receiving unit 13.

The RF circuit in a 2.4 GHz band includes a transmission-receiving switch circuit 14 and a diversity (DIV) switch circuit 15. The RF circuit in a 5 GHz band includes a transmission-receiving switch circuit 16, a diversity (DIV) switch circuit 17, and a high-pass filter (HPF) 18.

On the other hand, the electronic device 1 comprises an antenna unit which has an LF transmission-receiving antenna 20, an HF transmission-receiving antenna 21, and a receive-dedicated antenna 22 which is a dual-band antenna used in common for LF and HF. This antenna unit has a diversity type of antenna structure adaptive to LF and HF frequency bands, as will be described later. This is an antenna structure capable of obtaining diversity effects adaptive to each of the frequency bands in a receiving mode.

The LF transmission-receiving antenna 20 is connected to the transmission-receiving switch circuit 14 via a coaxial cable 200. The transmission-receiving switch circuit 14 transfers a transmission signal from the LF transmission unit 10 to the LF transmission-receiving antenna 20 in a transmission mode. Further, the transmission-receiving switch circuit 14 transfers a signal received by the LF transmission-receiving antenna 20 to the LF receiving unit 11 via the DIV switch circuit 15 in a receiving mode.

The HF transmission-receiving antenna 21 is connected to the transmission-receiving switch circuit 16 via a coaxial cable 221. The transmission-receiving switch circuit 16 transfers a transmission signal from the HF transmission unit 12 to the HF transmission-receiving antenna 21 in a transmission mode. Further, the transmission-receiving switch circuit 16 transfers a signal received by the HF transmission-receiving antenna 21 to the HF receiving unit 13 via the DIV switch circuit 17 in a receiving mode.

On the other hand, the receive-dedicated antenna 22 is connected to the DIV switch circuit 15 via a coaxial cable 222. The receive-dedicated antenna 22 is also connected to the HPF 18 via the coaxial cable 222. This HPF 18 is connected to the DIV switch circuit 17.

In a receiving mode, the DIV switch circuit 15 compares received power of the LF transmission-receiving antenna 20 with that of the receive-dedicated antenna 22, so as to switch to an antenna side (20 or 22) indicating a higher level. Further, in a receiving mode, the DIV switch circuit 17 compares received power of the HF transmission-receiving antenna 21 with that of the receive-dedicated antenna 22, so as to switch to an antenna side (21 or 22) indicating a higher level.

### (Antenna structure)

The present antenna unit has an antenna structure in which the LF transmission-receiving antenna 20 and the HF transmission-receiving antenna 21 are arranged at predetermined distances DL, DH from the receive-dedicated antenna 22, as shown in FIG. 1.

Here, if a wavelength in the 2.4 GHz LF band is λb, the LF transmission-receiving antenna 20 is positioned at a distance DL of "(2n + 1) *λb/4 (however, n = 1, 2, 3, ...) from the receive-dedicated antenna 22.

Furthermore, if a wavelength in the 5 GHz HF band is λa, the HF transmission-receiving antenna 21 is positioned at a distance DH of "(2n + 1) *λa/4 (however, n = 1, 2, 3, ...) from the receive-dedicated antenna 22.

Such an arrangement relation among the three antennas enables an antenna structure adaptive to the LF and HF frequency bands, and capable of obtaining advantageous diversity effects in a receiving mode.

### (Functional effects of the embodiment)

For example, in a transmission mode of the LF wireless LAN, the transmission-receiving switch circuit 14 allows an RF signal output from the LF transmission unit 10 to be transmitted as radio waves from the LF transmission-receiving antenna 20. Further, in a transmission mode of the HF wireless LAN, the transmission-receiving switch circuit 16 allows an RF signal output from the HF transmission unit 12 to be transmitted as radio waves from the HF transmission-receiving antenna 21.

On the other hand, in a receiving mode of the LF wireless LAN, the transmission-receiving switch circuit 14 allows an RF signal received by the LF transmission-receiving antenna 20 to be transferred to the DIV switch circuit 15. At the same time, the RF signal is also received by the receive-dedicated antenna 22 to be transferred to the DIV switch circuit 15. The DIV switch circuit 15 compares received power of the LF transmission-receiving antenna 20 with that of the receive-dedicated antenna 22, so as to transfer the RF signal received by an antenna side indicating a higher level to the LF receiving unit 11.

Furthermore, in a receiving mode of the HF wireless LAN, the transmission-receiving switch circuit 16 allows an RF signal received by the HF transmission-receiving antenna 21 to be transferred to the DIV switch circuit 17. At the same time, the RF signal is also received by the receive-dedicated antenna 22 to be transferred to the DIV switch circuit 17.

Here, the HPF 18 extracts only the RF signal in the 5 GHz band, which is HF, from the RF signal received by the receive-dedicated antenna 22 to transmit it to the DIV switch circuit 17. The DIV switch circuit 17 compares received power of the HF transmission-receiving antenna 21 with that of the receive-dedicated antenna 22, so as to transfer the RF signal received by an antenna side indicating a higher level to the HF receiving unit 13.

As described above, to be brief, the electronic device of the present embodiment can realize the diversity antenna by the antenna structure with a total of three antennas including the two transmission-receiving antennas 20, 21 adaptive to the LF and HF frequency bands, and one receive-dedicated antenna 22 adaptive to each of the frequency bands and thus used in common. In other words, the wireless communication function can be achieved which is capable of obtaining diversity effects with the dual bands adaptive to the LF and HF frequency bands.

The diversity antenna usually needs a four-antenna structure, but because one antenna member can be eliminated, so that it is possible to save an antenna mounting space in the electronic device. This is therefore effective especially in small-sized electronic devices such as small notebook-sized personal computers and portable information terminals with a limited space for mounting components.

In addition, the wireless communication unit of the present embodiment has a configuration in which the HPF 18 separates the RF signal received by the receive-dedicated antenna 22. Therefore, a complicated RF switch circuit or the like is not particularly needed, and it is thus possible to achieve a dual-band wireless communication function with small receiving losses and simple circuitry.

### (Mounting configuration of the antenna unit)

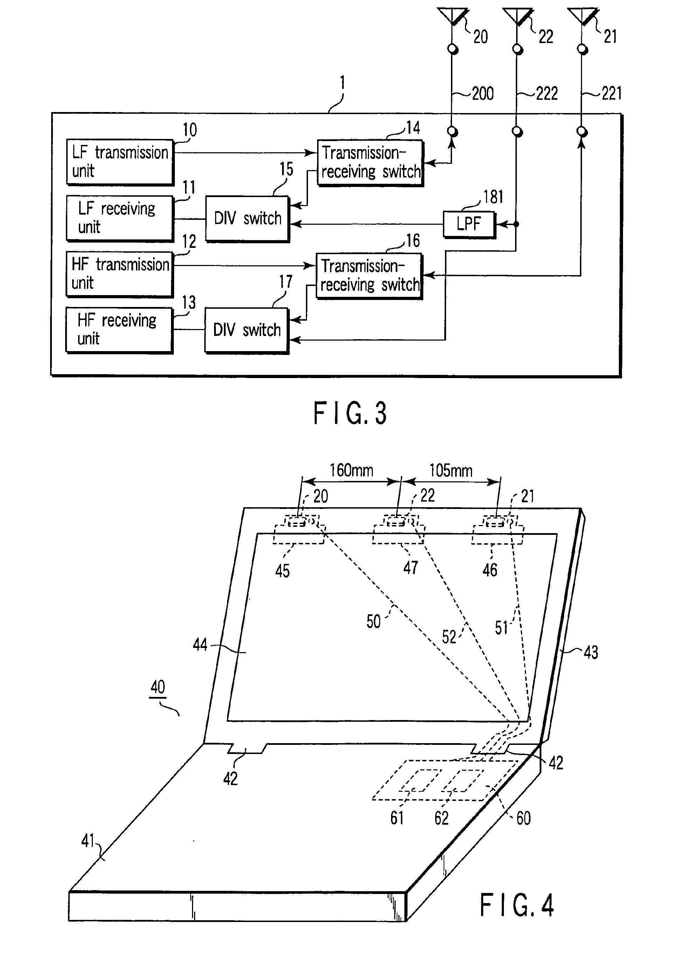

A mounting configuration of the antenna unit in the present embodiment will be described below with reference to FIG. 4 on the assumption that the electronic device 1 is a notebook-sized personal computer 40, for example.

The present personal computer 40 visually comprises a computer main unit 41, and a display device 43 pivotally attached to the computer 41 via hinges 42.

The computer main unit 41 has a circuit board 60 on which the wireless communication unit described above is mounted, in addition to a main circuit board on which a CPU and the like are mounted and a keyboard. An RF circuit group 61, for example, in a 2.4 GHz band and an RF circuit group (including the HPF 18 and the like) 62, for example, in a 5 GHz band are mounted on the circuit board 60.

The display device 43 is constituted of a case which holds a liquid crystal display panel 44. As shown in FIG. 4, the display device 43 has antenna substrates 45, 46, 47 on which the two transmission-receiving antennas 20, 21 and one receive-dedicated antenna 22 described above are mounted, in an upper part of the case, on a backside of the liquid crystal display panel 44. These antenna substrates 45, 46, 47 are circuit boards whose one side is made of a glass epoxy material, for example. It should be noted that the antennas 20 to 22 are arranged so as to project to a display surface side of the liquid crystal display panel 44.

Furthermore, the transmission-receiving antennas 20, 21 are disposed at a distance of, for example, 3 mm or more from an edge of the liquid crystal display panel 44. Such a configuration enables the case of the display device 43 to keep being thin. Moreover, omnidirectional radiation characteristics can be obtained without deflection to any of the display surface side or backside of the liquid crystal display panel 44. In addition, the antennas 20 to 22 can be disposed at relatively high positions, so that it is possible to acquire a transmission-receiving environment with little influence of the surroundings.

Here, the receive-dedicated antenna 22 is disposed in the vicinity of an upper center of the liquid crystal display panel 44 between the transmission-receiving antennas 20, 21, as in the case shown in FIG. 1. In an arrangement relation among the three antennas, the antenna structure is realized which adapts to the LF and HF frequency bands and can obtain advantageous diversity effects in a receiving mode.

More specifically, if a wavelength in the 2.4 GHz LF band is λb, the LF transmission-receiving antenna 20 is positioned at a distance of "(2n + 1) *λb/4 (however, n = 1, 2, 3, ...) from the receive-dedicated antenna 22. Here, in the case of the notebook-sized personal computer 40, the two antennas should desirably be separated from each other as far as possible, more concretely, at a distance resulting in, for example, "n = 2" so as to reduce interference between the antennas. To be concrete, the antennas 20 and 22 are arranged with a distance of about 160 mm as shown in FIG. 4, due to the wavelength λb in the LF band.

On the other hand, if a wavelength in the 5 GHz HF band is λa, the HF transmission-receiving antenna 21 is positioned at a distance of "(2n + 1) *λa/4 (however, n = 1, 2, 3, ...) from the receive-dedicated antenna 22. The antennas 21 and 22 are arranged about 105 mm away from each other, concretely, at a distance resulting in, for example, "n = 3" as shown in FIG. 4, due to the wavelength λa in the HF band.

Furthermore, the three antennas 20, 21, 22 are connected to the circuit board 60 of the wireless communication unit built in the computer main unit 41 via coaxial cables 50, 51, 52, respectively. This wireless communication unit comprises the same circuitry as that in FIG. 1.

With such an antenna mounting configuration, the antenna structure advantageous in the diversity effects can be realized in the case of the display device 43 especially using an upper portion space thereof, on the assumption that the electronic device 1 is, for example, the notebook type of personal computer 40. Concretely, it is possible to reduce the interference between the antennas or spurious effects. In addition, owing to the configuration in which the antennas project to the display surface side of the liquid crystal display panel 44, thickness of the case of the display device 43 can be retained, and well-balanced radiation characteristics can be obtained both on the display surface side and backside.

### (Second embodiment)

FIG. 2 is a diagram showing a second embodiment.

In the electronic device 1 of the present embodiment, the receive-dedicated antenna 22 is connected to band pass filters (BPF) 180a, 180b in the wireless communication unit via the coaxial cable 222.

The BPF 180a is connected to the DIV switch circuit 15 to extract a frequency signal adaptive to the LF band from a radio frequency signal received by the receive-dedicated antenna 22. On the other hand, the BPF 180b is connected to the DIV switch circuit 17 to extract a frequency signal adaptive to the HF band from a radio frequency signal received by the receive-dedicated antenna 22.

Such a configuration can also realize the diversity type of antenna structure adaptive to the LF and HF frequency bands, similarly to the primary embodiment. It should be noted that the configuration of other parts is the same as that in the primary embodiment shown in FIG. 1 and will not be described.

### (Third embodiment)

FIG. 3 is a diagram showing a third embodiment.

In the electronic device 1 of the present embodiment, the receive-dedicated antenna 22 is directly connected to the DIV switch circuit 17 via the coaxial cable 222. The receive-dedicated antenna 22 is also connected to a low pass filter (LPF) 181 via the coaxial cable 222. The LPF 181 is connected to the DIV switch circuit 15 to extract a frequency signal adaptive to the LF band from a radio frequency signal received by the receive-dedicated antenna 22.

Such a configuration can also realize the diversity type of antenna structure adaptive to the LF and HF frequency bands, similarly to the primary embodiment. It should be noted that the configuration of other parts is the same as that in the primary embodiment shown in FIG. 1 and will not be described.

In addition, the configuration of the wireless communication unit is not limited to the configurations in the primary embodiment and modifications, and the wireless communication unit may have other configurations. More specifically, such a configuration may be possible wherein the receive-dedicated antenna 22 is connected to the DIV switch circuit 15 via the LPF 181, and also connected to the DIV switch circuit 17 via the HPF 18. Further, such a configuration may also be possible wherein the RF circuit group and LF circuit group are connected to the receive-dedicated antenna 22 via a switch circuit. In this case, the DIV switch circuits 15, 17 may be configured to have a filter circuit for adaptation to each of the frequency bands.

As described above in detail, the embodiments can reduce the space for mounting antennas, and thus can provide a small-sized and high-performance electronic device. More concretely, more antenna members can be reduced than in the conventional four-antennas structure, which is thus effective especially in small-sized electronic devices with a limited space for mounting components.

## Claims

1. An electronic device **characterized by** comprising:
two transmission-receiving antennas (20, 21) respectively adapted to different frequency bands;
a receiving antenna (22) for the frequency bands which forms two diversity antennas together with the transmission-receiving antennas; and
a wireless communication unit (10 to 13), connected to the transmission-receiving antennas and the receiving antenna, which performs wireless communication in each of the frequency bands.

2. The electronic device according to claim 1, **characterized in that**
the receiving antenna (22) is provided between the transmission-receiving antennas.

3. The electronic device according to claim 1, **characterized in that**
the transmission-receiving antennas include a first transmission-receiving antenna (21) adapted to a relatively high frequency band and a second transmission-receiving antenna (20) adapted to a relatively low frequency band; and
the receiving antenna (22) is disposed at a predetermined distance (DL, DH) from the first and second transmission-receiving antennas, thereby constituting the diversity antenna adaptive to each of the frequency bands.

4. The electronic device according to claim 1, **characterized in that**
the transmission-receiving antennas include the first transmission-receiving antenna (21) adapted to a first frequency band on a wavelength λa and the second transmission-receiving antenna (20) adapted to a second frequency band on a wavelength λb; and
the receiving antenna (22) is
disposed at a distance of "(2n + 1) *λa/4 (however, n = 1, 2, 3, ...) from the first transmission-receiving antenna, and
disposed at a distance of "(2n + 1) *λb/4 (however, n = 1, 2, 3, ...) from the second transmission-receiving antenna.

5. The electronic device according to claim 1, **characterized in that**
the wireless communication unit (11,13) includes a filter circuit for separating a radio frequency signal received by the receive-dedicated antenna (22) into signals in the respective frequency bands.

6. An electronic device **characterized by** comprising:
a display unit (43) which hold a display panel (44);
an antenna unit including three antennas (20-22) provided at a portion of the display unit; and
a wireless communication unit (60) which is connected to the antennas and achieves a wireless communication function in first and second frequency bands,
wherein the antenna unit has:
two transmission-receiving antennas (20, 21) respectively adapted to the first and second frequency bands; and
a receiving antenna (22) for the frequency bands and disposed at a predetermined distance from each of the transmission-receiving antennas, thereby constituting a diversity antenna adaptive to the frequency bands.

7. The electronic device according to claim 6, **characterized in that**
the receiving antenna (22) is provided between the two transmission-receiving antennas (20,21).

8. The electronic device according to claim 6, **characterized in that**
the antenna unit is provided at a portion of the display unit on a side opposite to the display panel;
the transmission-receiving antennas include a first transmission-receiving antenna adapted to a first frequency band on a wavelength λa and a second transmission-receiving antenna adapted to a second frequency band on a wavelength λb; and
the receive-dedicated antenna (22) is
disposed at a distance of "(2n + 1) *λa/4 (however, n = 1, 2, 3, ...) from the first transmission-receiving antenna, and
disposed at a distance of "(2n + 1) *λb/4 (however, n = 1, 2, 3, ...) from the second transmission-receiving antenna.

9. The electronic device according to claim 6, **characterized in that**
the transmission-receiving antennas include the first transmission-receiving antenna adapted to the first frequency band on the wavelength λa and the second transmission-receiving antenna adapted to the second frequency band on the wavelength λb;
the receive-dedicated antenna (22) is
configured to be disposed at a distance of "(2n + 1) *λa/4 (however, n = 1, 2, 3, ...) from the first transmission-receiving antenna, and disposed at a distance of "(2n + 1) *λb/4 (however, n = 1, 2, 3, ...) from the second transmission-receiving antenna; and
the antenna unit is provided at a portion of the display unit (43) to adapt to space diversity effects and polarization diversity effects.

10. The electronic device according to claim 6, **characterized in that**
the wireless communication unit (60) includes a filter circuit (61,62) for separating a radio frequency signal received by the receive-dedicated antenna into signals in the respective frequency bands.

11. An antenna unit for achieving a wireless communication function in different frequency bands are first and second frequency bands, the antenna unit **characterized by** comprising:
a first transmission-receiving antenna (20) adapted to the first frequency band;
a second transmission-receiving antenna (21) adapted to the second frequency band;
a receiving antenna (22) for the first and second frequency bands and disposed at a predetermined distance from each of the first and second transmission-receiving antennas, thereby constituting a diversity antenna adaptive to the frequency bands.

12. The electronic device according to claim 11, **characterized in that**
the receiving antenna (22) is provided between the first and second transmission-receiving antennas (20, 21) .

13. The antenna unit according to claim 11, **characterized in that**
when a wavelength in the first frequency band is λa, and a wavelength in the second frequency band is λb,
the receive-dedicated antenna (22) is
disposed at a distance of "(2n + 1) *λa/4 (however, n = 1, 2, 3, ...) from the first transmission-receiving antenna (20), and
disposed at a distance of "(2n + 1) *λb/4 (however, n = 1, 2, 3, ...) from the second transmission-receiving antenna (21).
